# EUROPÄISCHE PATENTSCHRIFT

(11) **EP 0 859 739 B1**
(45) Veröffentlichungstag und Bekanntmachung des Hinweises auf die Patenterteilung: **22.09.1999**
(21) Anmeldenummer: 96938091.4
(22) Anmeldetag: 05.11.1996
(51) Int. Cl.: C01B 33/158

(54) **VERFAHREN ZUR HERSTELLUNG VON ORGANISCH MODIFIZIERTEN AEROGELEN UNTER VERWENDUNG VON ALKOHOLEN**
PROCESS FOR PREPARING ORGANICALLY MODIFIED AEROGELS USING ALCOHOLS
PROCEDE DE PREPARATION D'AEROGELS MODIFIES DE MANIERE ORGANIQUE A L'AIDE D'ALCOOLS

(30) Priorität: 06.11.1995 DE 19541279
(43) Veröffentlichungstag der Anmeldung: 26.08.1998
(73) Patentinhaber: CABOT CORPORATION, Boston, MA 02109 (US)
(72) Erfinder: SCHWERTFEGER, Fritz, D-60529 Frankfurt (DE); ZIMMERMANN, Andreas, D-64347 Griesheim (DE)
(74) Vertreter: Luderschmidt, Schüler & Partner GbR
(86) Internationale Anmeldenummer: EP9604821
(87) Internationale Veröffentlichungsnummer: WO9717287

(56) Entgegenhaltungen:
- EP-A- 0 658 513
- WO-A-95/06617
- JOURNAL OF POROUS MATERIALS, Bd. 2, 1996, Seiten 315-324, XP000618097 SIV HAEREID & AL. : "Subcritical drying of silica gels"

## Beschreibung

Die Erfindung betrifft ein Verfahren zur Herstellung von organisch modifizierten SiO₂-Aerogelen unter Verwendung von Alkoholen.

Aerogele, insbesondere solche mit Porositäten über 60% und Dichten unter 0,6 g/cm³, weisen eine äußerst geringe thermische Leitfähigkeit auf und finden deshalb Anwendung als Wärmeisolationsmaterial, wie z. B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Es ist anzumerken, daß es sich bei den erfindungsgemäßen Gelen um Aerogele, im Sinne von Gel mit Luft als Dispersionsmittel handelt.

SiO₂-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellungsverfahren sind z. B. aus der EP-A-0 396 076 oder der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen CO₂ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von SiO₂-Gelen, wenn diese vor der Trocknung mit einem chlorhartigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogele mit Dichten unter 0,4 g/cm³ und Porositäten über 60% erreicht werden. Das auf dieser Trocknungstechnik basierende Herstellungsverfahren ist ausführlich in der WO 94/25149 beschrieben.

Die oben beschriebenen Gele können darüber hinaus vor der Trocknung in der alkohol-wässrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar. Darüber hinaus fallen bei der Silylierung mittels chlorhaltiger Silylierungsmittel zwangsläufig in sehr großen Mengen Hydrogenchlorid (HCl) sowie eine Vielzahl damit verbundener Nebenprodukte an, die gegebenenfalls eine sehr aufwendige und kostenintensive Reinigung der silylierten SiO₂-Gele durch mehrmaliges Waschen mit einem geeigneten organischen Lösungsmittel erfordern. Die damit verbundenen, besonders korrosionsbeständigen Produktionsanlagen sind ebenfalls sehr teuer. Das mit der Entstehung sehr großer Mengen an HCl-Gas verbundene Sicherheitsrisiko bedarf noch zusätzlich einer sehr aufwendigen Technik und ist damit ebenfalls sehr kostenintensiv.

Eine erste nicht unerhebliche Kostensenkung kann durch die Verwendung von Wasserglas als Ausgangsmaterial für die Herstellung der SiO₂-Gele erreicht werden. Dazu kann beispielsweise aus einer wässrigen Wasserglaslösung mit Hilfe eines Ionenaustauscherharzes eine Kieselsäure hergestellt werden, die durch Zugabe einer Base zu einem SiO₂-Gel polykondensiert. Nach Austausch des wässrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren wird z.B. in der DE-A-43 42 548 offenbart.

Die weiter oben beschriebenen, mit der Verwendung von chlorhaltigen Silylierungsmitteln verbundenen Probleme der außerordentlich hohen Verfahrenskosten sind jedoch durch die Verwendung von Wasserglas als Ausgangsmaterial nicht gelöst.

In der deutschen Patentanmeldung P 19502453.2 wird die Verwendung eines chlorfreien Silylierungsmittels beschrieben. Dazu wird das in den oben beschriebenen Verfahren, auf unterschiedlichen Wegen erhaltene silikatische Lyogel vorgelegt und mit einem chlorfreien Silylierungsmittel umgesetzt. Als Silylierungsmittel werden dabei vorzugsweise Methylisopropenoxysilane (Me₄₋ₙSi(OC(CH₃)CH₂)ₙ mit n = 1 bis 3) eingesetzt. Das dabei entstehende, auf der Oberfläche mit Methylsilylgruppen modifizierte SiO₂-Gel kann anschließend wiederum aus einem organischen Lösungsmittel heraus an der Luft getrocknet werden.

Durch die Verwendung der chlorfreien Silylierungsmittel wird zwar das Problem der Bildung von HCl gelöst, jedoch stellen die verwendeten, chlorfreien Silylierungsmittel ebenfalls einen außerordentlich hohen Kostenfaktor dar.

In der WO 95/06617 werden hydrophobe Kieselsäureaerogele offenbart, die durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wässrigen Lösungen anorganischer Basen, wobei der pH-Wert des Hydrogels im Bereich von 7,5 bis 11 gehalten wird, Verdrängung der in dem Hydrogel enthaltenen wässrigen Phase durch einen Alkohol und anschließende überkritische Trocknung des erhaltenen Alkogels, erhältlich sind.

Als Alkohole eignen sich dabei für den Wasseraustausch C₁-C₅-Alkohole, vorzugsweise C₃-C₅-Alkohole, insbesondere Isopropanol.

Es ist bekannt, daß es bei Verwendung der oben genannten Alkohole unter überkritischen Bedingungen (WO 95/06617) zu einer Veresterung des verwendeten Alkohols mit den Oberflächen-OH-Gruppen des Lyogels kommt. Dadurch können Alkoxy-modifizierte Aerogele, wie z.B. Isopropoxy-modifizierte Aerogele erhalten werden, die hydrophobe Oberflächengruppen aufweisen.

Nachteilig bei dem in der WO 95/06617 offenbarten Herstellungsverfahren ist jedoch, daß überkritische Bedingungen für die Trocknung benötigt werden, die z.B. für Isopropanol bei einer Temperatur im Bereich von 240 bis 280°C und bei einem Druck von etwa 55 bis 90 bar liegen.

Aufgabe der vorliegenden Erfindung war es deshalb, ein Verfahren zur Herstellung von Aerogelen mit hydrophoben Oberflächengruppen bereitzustellen, das keines der oben beschriebenen und damit aus dem Stand der Technik bekannten Probleme aufweist. Insbesondere soll das erfindungsgemäße Verfahren kostengünstig sowie verfahrenstechnisch einfach durchzuführen sein.

Diese Aufgabe wird gelöst durch ein Verfahren zur Herstellung von Aerogelen mit hydrophoben Oberflächengruppen, bei dem man
a) ein silikatisches Lyogel vorlegt,
b) gegebenenfalls das in Schritt a) vorgelegte Lyogel einem Lösungsmitteltausch zu einem anderen Lösungsmittel unterwirft,
c) das in Schritt a) oder b) erhaltene Gel mit mindestens einem C₁-C₆-Alkohol bei einer Temperatur im Bereich von 25°C bis 220°C und einem Druck von 1 bis 50 bar unterkritisch oberflächenmodifiziert, und
d) das in Schritt c) erhaltene, oberflächenmodifizierte Gel unterkritisch trocknet.

Vorzugsweise werden C₃-C₅-Alkohole verwendet, wie z.B. Isopropanol, Isobutanol, tert.-Butanol, sek.-Pentanol und tert.-Pentanol. Besonders bevorzugt sind Isopropanol, Isobutanol und tert.-Butanol.

Der Alkohol wird dabei im allgemeinen in einer Menge von 1 bis 100 Gew.-%, bezogen auf das gesamte Lösungsmittel eingesetzt. Ferner können auch Gemische der oben genannten Alkohole eingesetzt werden.

In einer bevorzugten Ausführungsform wird in Schritt a) ein silikatisches Lyogel vorgelegt, das durch Hydrolyse und Kondensation von Si-Alkoxiden in einem organischen Lösungsmittel mit Wasser erhältlich ist (i). Als Si-Alkoxid wird ein Tetraalkoxysilan, vorzugsweise Tetraethoxy- oder Tetramethoxysilan verwendet. Das organische Lösungsmittel ist dabei vorzugsweise ein Alkohol, besonders bevorzugt Ethanol oder Methanol, dem bis zu 20 Vol.-% Wasser zugesetzt sein können.
Bei der Hydrolyse und Kondensation der Si-Alkoxide in einem organischen Lösungsmittel mit Wasser können in einem ein- oder zweistufigen Schritt als Katalysatoren Säuren und/oder Basen zugesetzt werden.
In einer besonders bevorzugten Ausführungsform wird in Schritt a) ein silikatisches Lyogel vorgelegt, das dadurch hergestellt wird, daß man eine wässrige Wasserglaslösung mit Hilfe eines sauren Ionenaustauscherharzes oder einer Mineralsäure auf einen pH-Wert ≤ 3 bringt, die dabei entstandene Kieselsäure durch Zugabe einer Base zu einem SiO₂-Gel polykondensiert und, falls eine Mineralsäure benutzt wurde, das Gel mit Wasser elektrolytfrei wäscht (ii). Dabei wird im allgemeinen Natrium- und/oder Kaliumwasserglas verwendet. Als Ionenaustauscherharz wird vorzugsweise ein saures Harz verwendet, wobei vor allem solche geeignet sind, die Sulfonsäuregruppen enthalten. Falls man Mineralsäuren einsetzt, sind vor allem Salzsäure und Schwefelsäure geeignet. Als Base wird im allgemeinen NH₄OH, NaOH, KOH, Al(OH)₃ und/oder kolloidale Kieselsäure eingesetzt. Falls eine Mineralsäure verwendet wurde, wird das mit Hilfe der Base erzeugte SiO₂-Gel mit Wasser im wesentlichen elektrolytfrei gewaschen. Vorzugsweise wird dabei solange gewaschen, bis das ablaufende Waschwasser dieselbe elektrische Leitfähigkeit aufweist wie entmineralisiertes Wasser. Vor dem Waschen läßt man das Gel vorzugsweise altern, und zwar im allgemeinen bei 20 bis 100°C, vorzugsweise bei 40 bis 100°C und insbesondere 80 bis 100°C, und einem pH-Wert von 4 bis 11, vorzugsweise 5 bis 9, und insbesondere 5 bis 7. Die Zeit dafür beträgt im allgemeinen 1 Sekunde bis 48 Stunden, vorzugsweise 1 Sekunde bis 24 Stunden und insbesondere 1 Sekunde bis 5 Stunden.

Das in (i) oder (ii) erhaltene Gel wäscht man solange mit einem organischen Lösungsmittel, bis der Wassergehalt des Gels ≤ 5 Gew.-%, vorzugsweise ≤ 2 Gew.-% und besonders bevorzugt ≤ 1 Gew.-%, ist. Als Lösungsmittel werden im allgemeinen aliphatische Alkohole, Ether, Ester oder Ketone, sowie aliphatische oder aromatische Kohlenwasserstoffe verwendet. Bevorzugte Lösungsmittel sind C₁- C₅-Alkohole, Aceton, Tetrahydrofuran, Essigsäureethylester, Dioxan, n-Hexan und Toluol. Besonders bevorzugt als Lösungsmittel sind Isopropanol, Isobutanol, tert.-Butanol und Aceton. Man kann aber auch Gemische aus den genannten Lösungsmitteln verwenden. Ferner kann auch zuerst das Wasser mit einem wassermischbaren Alkohol ausgewaschen und dann dieser mit einem Kohlenwasserstoff ausgewaschen werden.

Der Schritt a) wird im allgemeinen bei einer Temperatur zwischen dem Gefrierpunkt der Lösung und 70°C durchgeführt.

Das in Schritt a) hergestellte Lyogel kann ferner aus oben beschriebenen silikatischen Ausgangsverbindungen hergestellt sein, die zusätzlich noch zur Kondensation befähigte Zirkonium-, Aluminium- und/oder Titan-Verbindungen enthalten.

Als organische Lösungsmittel werden in Schritt b) im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind C₁-C₅-Alkohole, Aceton, Tetrahydrofuran, Essigsäureethylester, Dioxan, n-Hexan, n-Heptan und Toluol. Besonders bevorzugt wird Isopropanol als Lösungsmittel in Schritt b) verwendet. Unter Lösungsmitteltausch ist dabei nicht nur der einmalige Tausch des Lösungsmittels zu verstehen, sondern gegebenenfalls auch das mehrmalige Wiederholen mit unterschiedlichen Lösungsmitteln.

Man kann auch das in Schritt b) erhaltene Lyogel einer weiteren Alterung unterziehen. Dies geschieht im allgemeinen zwischen 20°C und dem Siedepunkt des organischen Lösungsmittels. Gegebenenfalls kann auch unter Druck bei höheren Temperaturen gealtert werden. Die Zeit beträgt im allgemeinen 1 Sekunde bis 48 Stunden, vorzugsweise 1 Sekunde bis 24 Stunden. Nach einer solchen Alterung kann sich gegebenenfalls ein weiterer Lösungsmitteltausch zu einem gleichen oder anderen Lösungsmittel anschließen. Dieser zusätzliche Alterungsschritt kann gegebenenfalls, auch nochmals wiederholt werden.

In Schritt c) wird das aus Schritt a) oder b) erhaltene Gel mit mindestens einem C₁-C₆-Alkohol unterkritisch oberflächenmodifiziert, in dem es in einem Druckbehälter oder Autoklaven bei einer Temperatur im Bereich von 25°C bis 220°C und einem Druck von 1 bis 50 bar gehalten wird.

Als Alkohole werden bevorzugt Isopropanol, Isobutanol, tert.-Butanol, sek. Pentanol und tert.-Pentanol verwendet. Besonders bevorzugt sind Isopropanol sowie Isobutanol oder tert.-Butanol. Diese können allein, in Gemischen oder mit anderen nichtreaktiven organischen Lösungsmitteln oder Lösungsmittelgemischen, wie z.B. Aceton, Tetrahydrofuran, Dioxan, n-Hexan oder Toluol, verwendet werden.

Die Temperaturen und Drücke zur Oberflächenmodifizierung hängen vom jeweils verwendeten Lösungsmittel bzw. Lösungsmittelgemisch ab. Sie liegen jedoch deutlich unterhalb der kritischen Temperatur und des kritischen Druckes der verwendeten Alkohole.

Bevorzugt ist eine Temperatur zwischen 150 und 220°C. Der Druck liegt bevorzugt zwischen 20 und 50 bar. Die Zeiten, bei dem das Lyogel unter diesen Bedingungen gehalten wird, liegen bevorzugt zwischen 30 Minuten und 20 Stunden, besonders bevorzugt sind Zeiten zwischen 30 Minuten und 10 Stunden.

Gegebenenfalls können zusätzlich auch noch geringe Mengen eines Silylierungsmittels zugesetzt werden. Als Silylierungsmittel eignen sich im allgemeinen Silane der Formeln R¹₄₋ₙSiClₙ oder R¹₄₋ₙ Si(OR^{²})ₙ mit n = 1 bis 3, wobei R¹ und R² unabhängig voneinander C₁-C₆-Alkyl, Cyclohexyl oder Phenyl sind. Auch Isopropenoxysilane sowie Silazane sind geeignet. Vorzugsweise verwendet man Trimethylchlorsilan. Darüber hinaus können alle dem Fachmann bekannten Silylierungsmittel eingesetzt werden, beispielsweise auch solche, wie in der DE-A-44 30 669 offenbart.
Die Mengen liegen im allgemeinen zwischen 0 und 1 Gew.-% (bezogen auf das Lyogel), bevorzugt sind Konzentrationen zwischen 0 und 0,5 Gew.-%, besonders bevorzugt zwischen 0 und 0,2 Gew.-%.

Zur Beschleunigung des oberflächenmodifizierenden Prozesses kann sich ferner Wasser im System befinden. Bevorzugt sind dabei Konzentrationen zwischen 0 und 10 Gew.-% (bezogen auf das Lyogel). Darüber hinaus können sich auch dem Fachmann bekannte Katalysatoren, wie z.B. Säuren, Basen oder metallorganische Verbindungen zur Beschleunigung des Prozesses im System befinden.

Gegebenenfalls wird das im Schritt c) erhaltene oberflächenmodifizierte Gel vor dem Schritt d) noch einem Lösungsmitteltausch unterzogen. Als Lösungsmittel werden dazu im allgemeinen aliphatische Alkohole, Ether, Ester oder Ketone sowie aliphatische oder aromatische Kohlenwasserstoffe verwendet. Man kann auch Gemische der oben genannten Lösungsmittel verwenden. Bevorzugte Lösungsmittel sind Methanol, Ethanol, i-Propanol, Aceton, Tetrahydrofuran, Essigsäureethylester, Dioxan, n-Hexan, n-Heptan und Toluol. Besonders bevorzugt wird i-Propanol als Lösungsmittel verwendet.

In Schritt d) wird das oberflächenmodifizierte Gel unterkritisch getrocknet, vorzugsweise bei Temperaturen von -30 bis 200°C, besonders bevorzugt 0 bis 100°C, sowie Drücken von 0,001 bis 20 bar, besonders bevorzugt 0,01 bis 5 bar, insbesondere 0,1 bis 2 bar, beispielsweise durch Strahlungs-, Konvektions- und/oder Kontakttrocknung. Die Trocknung wird im allgemeinen so lange fortgeführt, bis das Gel einen Lösungsmittel-Restgehalt von weniger als 0,1 Gew.-% aufweist. Die bei der Trocknung erhaltenen Aerogele sind dauerhaft hydrophob.

In einer weiteren Ausführungsform kann das Gel je nach Anwendung vor der Oberflächenmodifizierung noch einer Netzwerkverstärkung unterworfen werden. Dies geschieht, indem man das erhaltene Gel mit einer Lösung eines zur Kondensation befähigten Alkyl- und/oder Arylorthosilikates der Formel R¹₄₋ₙSi(OR²)ₙ, wobei n = 2 bis 4 ist und R¹ und R² unabhängig voneinander lineare oder verzweigte C₁-C₆-Alkyl-Reste, Cyclohexyl-Reste oder Phenyl-Reste sind, oder mit einer wässrigen Kieselsäure-Lösung umsetzt. Diese Netzwerkverstärkung kann vor und/oder nach jedem durchgeführten Alterungsschritt bzw. Lösungsmitteltausch durchgeführt werden.

In einer weiteren bevorzugten Ausführungsform weist das Gel vor der Trocknung einen E-Modul auf der größer als 3 MPa beträgt, eine Oberfläche nach BET auf, die größer als 400 m²/g ist und eine Porenradienverteilung auf, die im Bereich von 2 bis 20 nm, vorzugsweise im Bereich von 5 bis 10 nm, liegt, damit die nach der unterkritischen Trocknung erhaltenen Aerogele vorzugsweise eine Dichte von ≤ 200 kg/m³, besonders bevorzugt von ≤ 150 kg/m³ aufweisen.

Das erfindungsgemäße Verfahren wird im folgenden anhand von einem Ausführungsbeispiel näher beschrieben, ohne dadurch beschränkt zu werden.

### Beispiel

2 l einer Natriumwasserglaslösung (SiO₂-Gehalt 6 Gew.-% und Na₂O:SiO₂ Verhältnis von 1:3,3) werden über eine ummantelte Glaskolonne (Länge = 100 cm, Durchmesser = 8 cm), die mit 1 l eines sauren lonenaustauscherharzes (Styroldivinylbenzol-Copolymer mit Sulfonsäuregruppen, handelsüblich unter dem Namen ^{®}Duolite C 20) gefüllt ist, geleitet (ca. 70 ml/min). Die Kolonne wird bei einer Temperatur von 5°C betrieben. Die am unteren Ende der Kolonne ablaufende Kieselsäurelösung hat einen pH-Wert von 2,3. Diese Lösung wird zur Polykondensation mit einer 1,0 molaren NaOH-Lösung auf einen pH von 4,7 gebracht und anschließend 3,0 Stunden bei 85°C gealtert. Das gealterte Hydrogel hat einen Elastizitätsmodul von 15,5 MPa. Es wird mit Isopropanol so lange extrahiert, bis der Wassergehalt im Gel unter 2,0 Gew.-% liegt.
Anschließend wird das isopropanolhaltige Lyogel in Isopropanol in einem Autoklaven auf 220°C und einen Druck von 40 bar erhitzt und 3 Stunden unter diesen Bedingungen gehalten. Die Trocknung des Gels erfolgt an Luft (3 Stunden bei 40°C, dann 2 Stunden bei 50°C und 12 Stunden bei 150°C).
Das so erhaltene, transparente Aerogel hat eine Dichte von 0,15 g/cm³. Die spezifische Oberfläche nach BET liegt bei 500 m²/g. Der λ-Wert liegt bei 0,018 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

## Patentansprüche

1. Verfahren zur Herstellung von Aerogelen mit hydrophoben Oberflächengruppen, bei dem man
a) ein silikatisches Lyogel vorlegt,
b) gegebenenfalls das in Schritt a) vorgelegte Lyogel einem Lösungsmitteltausch zu einem anderen Lösungsmittel unterwirft,
c) das in Schritt a) oder b) erhaltene Gel mit mindestens einem C₁-C₆-Alkohol bei einer Temperatur im Bereich von 25°C bis 220°C und einem Druck von 1 bis 50 bar unterkritisch oberflächenmodifiziert, und
d) das in Schritt c) erhaltene, oberflächenmodifizierte Gel unterkritisch trocknet.

2. Verfahren gemäß Anspruch 1, dadurch gekennzeichnet, daß man in Schritt c) mindestens einen C₃-C₅-Alkohol einsetzt.

3. Verfahren gemäß Anspruch 1 oder 2, dadurch gekennzeichnet, daß man in Schritt c) Isopropanol, Isobutanol oder tert.-Butanol einsetzt.

4. Verfahren gemäß mindestens einem der Ansprüche 1 bis 3, dadurch gekennzeichnet, daß man den Alkohol in einer Menge von 1 bis 100 Gew.-%, bezogen auf das gesamte Lösungsmittel einsetzt.

5. Verfahren gemäß mindestens einem der Ansprüche 1 bis 4, dadurch gekennzeichnet, daß man ein silikatisches Lyogel vorlegt, das durch Hydrolyse und Kondensation von Si-Alkoxiden in einem organischen Lösungsmittel mit Wasser erhältlich ist, und anschließend das erhaltene Gel mit einem organischen Lösungsmittel solange wäscht, bis der Wassergehalt des Gels ≤ 5 Gew.-% ist.

6. Verfahren gemäß mindestens einem der Ansprüche 1 bis 4, dadurch gekennzeichnet, daß man ein silikatisches Lyogel vorlegt, das dadurch hergestellt wird, daß man eine wässrige Wasserglaslösung mit Hilfe eines sauren lonenaustauscherharzes oder einer Mineralsäure auf einen pH-Wert ≤ 3 bringt, die dabei entstandene Kieselsäure durch Zugabe einer Base zu einem SiO₂-Gel polykondensiert und falls eine Mineralsäure benutzt wurde, das Gel mit Wasser elektrolytfrei wäscht, und anschließend das erhaltene Gel mit einem organischen Lösungsmittel solange wäscht, bis der Wassergehalt des Gels ≤ 5 Gew.-% ist.

7. Verfahren gemäß mindestens einem der Ansprüche 1 bis 6, dadurch gekennzeichnet, daß man das in Schritt a) erhaltene SiO₂-Gel bevor man es wäscht bei 20 bis 100°C und einem pH-Wert von 4 bis 11 für eine Dauer von 1 Sekunde bis 48 Stunden altern läßt.

8. Verfahren gemäß mindestens einem der Ansprüche 1 bis 7, dadurch gekennzeichnet, daß man in Schritt b) als organisches Lösungsmittel einen C₁-C₅-Alkohol, Aceton, Tetrahydrofuran, Essigsäureethylester, Dioxan, n-Hexan, n-Heptan und/oder Toluol einsetzt.

9. Verfahren gemäß mindestens einem der Ansprüche 1 bis 8, dadurch gekennzeichnet, daß man das in Schritt a) oder b) erhaltene Gel vor der Silylierung mit einer Lösung eines zur Kondensation befähigten Alkyl- und/oder Arylorthosilikates der Formel R¹₄₋ₙSi(OR²)ₙ, wobei n = 2 bis 4 ist und R¹ und R² unabhängig voneinander lineare oder verzweigte C₁-C₆-Alkyl-Reste, Cyclohexyl-Reste oder Phenyl-Reste sind, oder mit einer wässrigen Kieselsäure-Lösung umsetzt.

10. Verfahren gemäß mindestens einem der Ansprüche 1 bis 9, dadurch gekennzeichnet, daß man die Oberflächenmodifikation zwischen 30 Minuten und 20 Stunden durchführt.

11. Verfahren gemäß mindestens einem der Ansprüche 1 bis 10, dadurch gekennzeichnet, daß man die Oberflächenmodifikation in Gegenwart geringer Mengen eines Silylierungsmittels durchführt.

12. Verfahren gemäß mindestens einem der Ansprüche 1 bis 11, dadurch gekennzeichnet, daß man die Oberflächenmodifikation in Gegenwart eines Katalysators durchführt.

13. Verfahren gemäß mindestens einem der Ansprüche 1 bis 12, dadurch gekennzeichnet, daß man das oberflächenmodifizierte Gel vor dem Schritt d) noch einem Lösungsmitteltausch unterwirft.

## Claims

1. A method of producing aerogels with hydrophobic surface groups in which
a) a silicated lyogel is presented,
b) possibly the lyogel presented in step a) is subjected to a solvent exchange to produce another solvent,
c) the gel obtained in step a) or b) is subcritically surface modified with at least one C₁ to C₆ alcohol at a temperature in the range from 25°C to 22°C and a pressure of 1 to 50 bars, and
d) the surface modified gel obtained in step c) is subcritically dried.

2. A method according to claim 1, characterised in that at least one C₃ to C₅ alcohol is used in step c).

3. A method according to claim 1 or 2, characterised in that isopropanol, isobutanol or tertiary butanol is used in step c).

4. A method according to at least one of claim 1 to 3, characterised in that the alcohol is used in an amount of 1 to 100% by weight in relation to the total solvent.

5. A method according to at least one of claims 1 to 4, characterised in that a silicated lyogel is presented which is obtainable by hydrolysis and condensation of Si-alkoxides in an organic solvent with water, after which the gel obtained is washed with an organic solvent until such time as the water content of the gel is ≤ 5% by weight.

6. A method according to at least one of claims 1 to 4, characterised in that a silicated lyogel is present which is produced in that an aqueous water glass solution is, by means of an acid ion exchange resin or a mineral acid, brought to a pH value of ≤ 3, the silicic acid produced thereby is polycondensed by the addition of a base to produce a SiO₂ gel and, if a mineral acid was used, the gel is washed electrolyte free `with water, after which the gel obtained is washed with an organic solvent until such time as the water content of the gel is ≤ 5% by weight.

7. A method according to at least ore of claims 1 to 6, characterised in that the SiO₂ gel obtained in step a), prior to being washed, is allowed to age at 20 to 100°C and a pH value of 4 to 11 for a period of 1 second to 48 hours.

8. A method according to at least one of claims 1 o 7, characterised in that in step b) the organic solvent used is a C₁ to C₅ alcohol, acetone, tetrahydrofurane, acetic acid ethyl ester, dioxane, n-hexane, n-heptane and/or toluene.

9. A method according to at lest one of claims 1 to 8, characterised in that the gel obtained in step a) or b), prior to silylation, is reacted with a solution of an alkyl and/or aryl orthosilicate to formula R¹₄₋ₙSi(OR²)ₙ, in which n = 2 to 4 and R¹ and R² independently of each other are linear or branched C₁ to C₆ alkyl radicals, cyclohexyl radicals or phenyl radicals, and which are capable of condensation, or with an aqueous silicic acid solution.

10. A method according to at least one of claims 1 to 9, characterised in that the surface modification is carried out between 30 minutes and 20 hours.

11. A method according to at least one of claims 1 to 10, characterised in that the surface modification is carried our in the presence of small amounts of a silylating agent.

12. A method according to at least one of claims 1 to 11, characterised in that the surface modification is carried out in the presence of a catalyst.

13. A method according to at least one of claims 1 to 12, characterised in that the surface modified gel is subjected to a solvent exchange prior to step d).

## Revendications

1. Procédé de préparation d'aérogels avec des groupes de surface hydrophobes, dans lequel on
a) prépare un lyogel silicaté,
b) on réalise éventuellement un échange de solvants du lyogel préparé à l'étape a) pour un autre solvant,
c) modifie la surface du gel obtenu à l'étape a) ou b) avec au moins un alcool en C₁-C₆ à une température dans l'intervalle de 25°C à 220°C et à une pression de 1 à 50 bar dans des conditions sous-critiques, et
d) sèche le gel modifié en surface obtenu à l'étape c) de manière sous-critique.

2. Procédé selon la revendication 1, caractérisé en ce qu'on utilise à l'étape c) au moins un alcool en C₃-C₅.

3. Procédé selon la revendication 1 ou 2, caractérisé en ce qu'on utilise à l'étape c) l'isopropanol, l'isobutanol ou le tert.-butanol.

4. Procédé selon au moins une des revendication 1 à 3, caractérisé en ce qu'on utilise l'alcool en une quantité de 1 à 100% en poids, par rapport à l'ensemble du solvant.

5. Procédé selon au moins une des revendication 1 à 4, caractérisé en ce qu'on prépare un lyogel silicaté, qu'on peut obtenir par hydrolyse et condensation d'alcoxydes de silicium dans un solvant organique avec de l'eau, et en ce qu'on lave ensuite le gel obtenu avec un solvant organique jusqu'à ce que la teneur en eau du gel soit ≤ 5% en poids.

6. Procédé selon une des revendications 1 à 4, caractérisé en ce qu'on prépare un lyogel silicaté, qui est préparé par les opérations consistant à amener une solution aqueuse de verre soluble au moyen d'une résine acide échangeuse d'ions ou d'un acide minéral à une valeur de pH ≤ 3, à polycondenser l'acide silicique ainsi obtenu par addition d'une base en un gel de SiO₂ et éventuellement à laver ensuite le gel avec de l'eau pour le rendre exempt d'électrolyte, et ensuite à laver le gel obtenu avec un solvant organique jusqu'à ce que la teneur en eau du gel soit ≤ 5% en poids.

7. Procédé selon au moins une des revendications 1 à 6, caractérisé en ce qu'on laisse vieillir le gel de SiO₂ obtenu à l'étape a) pendant une durée de 1 seconde à 48 heures avant de le laver à 20 à 100°C et à une valeur de pH de 4 à 11.

8. Procédé selon au moins une des revendications 1 à 7, caractérisé en ce qu'on utilise à l'étape b) comme solvant organique un alcool en C₁-C₅, l'acétone, le tétrahydrofurane, l'acétate d'éthyle, le dioxanne, le n-hexane, le n-heptane et/ou le toluène.

9. Procédé selon au moins une des revendications 1 à 8, caractérisé en ce qu'on met à réagir le gel obtenu à l'étape a) ou b) ayant la silylation avec une solution d'un alkyl- et/ou d'un arylorthosilicate capable de condensation de formule R¹₄₋ₙSi(OR²)ₙ, dans laquelle n = 2 à 4 et R¹ et R² sont indépendamment l'un de l'autre des groupes alkyle linéaires ou ramifiés en C₁-C₆, des groupes cyclohexyle ou des groupes phényle, ou avec une solution aqueuse de gel de silice.

10. Procédé selon au moins une des revendications 1 à 9, caractérisé en ce qu'on poursuit la modification de surface entre 30 minutes et 20 heures.

11. Procédé selon au moins une des revendications 1 à 10, caractérisé en ce qu'on poursuit la modification de surface en présence de petites quantités d'un agent de silylation.

12. Procédé selon au moins une des revendications 1 à 11, caractérisé en ce qu'on poursuit la modification de surface en présence d'un catalyseur.

13. Procédé selon au moins une des revendications 1 à 12, caractérisé en ce qu'on effectue sur le gel modifié en surface encore un échange de solvant avant l'étape d).
